# EUROPEAN PATENT SPECIFICATION

(11) **EP 3 018 043 B1**
(45) Date of publication and mention of the grant of the patent: **21.06.2017**
(21) Application number: 15185254.8
(22) Date of filing: 15.09.2015
(51) Int. Cl.: B62H 5/00, B62J 6/18, B62J 9/00

(54) **SADDLE-TYPE VEHICLE AND ADDITIONAL STORAGE BOX FOR USE ON SADDLE-TYPE VEHICLE**
SATTELFAHRZEUG UND ZUSÄTZLICHE AUFBEWAHRUNGSBOX FÜR SATTELFAHRZEUG
VÉHICULE À SELLE ET BOÎTE DE STOCKAGE SUPPLÉMENTAIRE POUR UTILISATION SUR UN VÉHICULE À SELLE

(30) Priority: 30.09.2014 JP 2014200202
(43) Date of publication of application: 11.05.2016
(73) Proprietor: HONDA MOTOR CO., LTD., Tokyo, 107-8556 (JP)
(72) Inventor: Kinoshita, Nobuaki, Saitama, 351-0193 (JP)
(74) Representative: Beder, Jens

(56) References cited:
- FR-A1- 2 979 892
- JP-A- 2014 000 909
- KR-Y1- 200 460 263

## Description

The present invention relates to a saddle-type vehicle including an additional storage box for use on the saddle-type vehicle.

As disclosed in JP 2013-189116, for example, there has heretofore been known a structure in which electric wires leading from a vehicle into the trunk are threaded through a gap defined between inner and outer wall members of the trunk.

The structure makes it difficult for third parties to make an unauthorized intervention against the electric wires from outside because the electric wires are not likely to be exposed. However, the structure remains to be further improved.

A problem to be carried out by the present invention is to provide a saddle-type vehicle and an additional storage box for use on a saddle-type vehicle which make it extremely hard for third parties to make an unauthorized intervention against electric wires from outside.

To solve the above problem, there is provided in accordance with the present invention a saddle-type vehicle including:
an additional storage box having an electric component and a lock mechanism therein;
a harness to be connected to the electric component;
a carrier on which the additional storage box can selectively and removably be mounted; and
a carrier fixing member fixing the carrier to a vehicle body frame;
wherein the carrier includes a carrier-side facing that faces the additional storage box and a wire channel allowing the harness to be threaded therethrough,
the additional storage box includes box fixing members fixing the additional storage box to the carrier , the box fixing members being manipulatable only from within the additional storage box, and a box-side facing that faces the carrier-side facing,
the carrier is fixed to the vehicle body frame by a carrier fixing member which can be manipulated only when the additional storage box is removed from the carrier, and
the wire channel of the carrier is covered by the box-side facing so that the harness cannot be manipulated when the additional storage box is fixed to the carrier.

In the above saddle-type vehicle, when the additional storage box is mounted on the carrier, since the wire channel of the carrier is covered by the box-side facing so that the harness cannot be manipulated, the harness is not exposed to external view. As the additional storage box is fixed to the carrier by the box fixing members that can be manipulated only from within the additional storage box, it is extremely difficult to remove the additional storage box unless the additional storage box is unlocked.

Therefore, the saddle-type vehicle makes it extremely hard for third parties to make an unauthorized intervention against electric wires from outside.

The saddle-type vehicle further includes a vehicle-side battery energizing the electric component and a control unit energizable by the vehicle-side battery to unlock the additional storage box in response to operation of a remote control key. The lock mechanism is actuatable by the electric component that is energized by electric power input from outside, and when the control unit receives a signal from the remote control key, the control unit supplies electric power to the electric component to unlock the lock mechanism.

With this arrangement, it is possible to install the additional storage box that is inexpensive as it does not require a receiver for receiving the signal from the remote control key.

The saddle-type vehicle further includes a vehicle body cover fixed to the vehicle body frame, a vehicle-side harness connected to the harness, supplying electric power from the vehicle-side battery to the electric component, and a connection coupler connecting the harness and the vehicle-side harness to each other within the vehicle body cover. The vehicle body cover is fixed to the vehicle body frame by a vehicle body cover fixing member which can be manipulated only when the additional storage box is removed from the carrier.

With the above arrangement, the harness on the additional storage box can be connected to the vehicle-side harness by the connection coupler. Consequently, the harness can easily be connected to the vehicle-side harness.

The connection coupler is disposed in the vehicle body cover. The vehicle body cover is fixed to the vehicle body frame by the vehicle body cover fixing member which can be manipulated only when the additional storage box is removed from the carrier. The additional storage box is fixed to the carrier by the box fixing members that can be manipulated only from within the additional storage box. Therefore, it is extremely difficult to remove the vehicle body cover unless the additional storage box is unlocked.

Therefore, the saddle-type vehicle makes it extremely hard for third parties to make an unauthorized intervention against the connection coupler from outside.

The saddle-type vehicle further includes a carrier-side connector provided on an end of the harness and disposed in the wire channel of the carrier, and an additional storage box-side connector provided on the box-side facing of the additional storage box, the additional storage box-side connector being connected to the carrier-side connector when the additional storage box is mounted on the carrier.

With this arrangement, the electric component in the additional storage box is connected to the vehicle-side harness simply when the additional storage box is mounted on the carrier.

In the above saddle-type vehicle, the wire channel of the carrier is closed by a wire channel cover when the additional storage box is not mounted on the carrier.

With this arrangement, the wire channel is not exposed even when the additional storage box is not mounted in place.
FIG. 1 is a perspective view of a saddle-type vehicle and an additional storage box for use on a saddle-type vehicle according to an embodiment of the present invention.
FIG. 2 is an enlarged fragmentary side elevational view of the saddle-type vehicle and the additional storage box.
FIG. 3 is a perspective view of a carrier from which the additional storage box has been removed.
FIG. 4(a) is a cross-sectional view of the carrier and the bottom of the additional storage box (taken along line 4-4 of FIG. 3), and FIG. 4(b) is a cross-sectional view of the carrier with a cover mounted thereon.
FIG. 5 is a sectional perspective view of the additional storage box.
FIG. 6 is a side elevational view, partly omitted from illustration, of a saddle-type vehicle and an additional storage box for use on a saddle-type vehicle according to another embodiment of the present invention.

A saddle-type vehicle and an additional storage box for use on a saddle-type vehicle according to an embodiment of the present invention will be described below with reference to the drawings. The drawings shall be viewed according to the orientation of the reference symbols. In the description which follows, forward, rearward, leftward, rightward, upward, and downward directions refer to directions observed by the driver of the vehicle. When necessary, the forward direction of the vehicle will be denoted by Fr, the rearward direction by Rr, the leftward direction by L, the rightward direction by R, the upward direction by U, and the downward direction by D. Identical or corresponding parts are denoted by identical reference symbols throughout views.

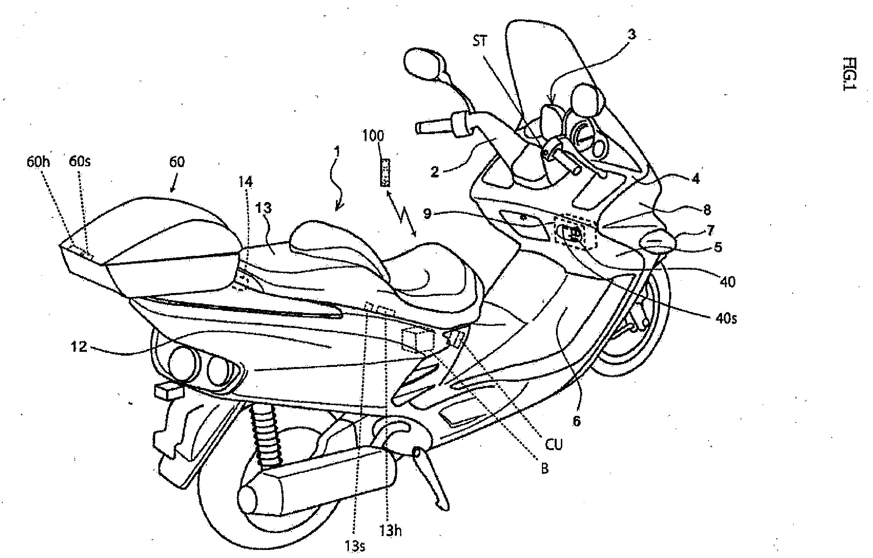

A saddle-type vehicle 1 shown in FIG. 1 is a scooter-type motorcycle. The vehicle 1 has on its front portion a handle 2 that is angularly movably supported on a vehicle frame, not shown. The handle 2 has its periphery covered with a panel 4 having instruments 3. The panel 4 is connected to a floor 6 by a vertical panel 5. The panel 4 has a front portion (forward portion of the vehicle) covered with a front cowl 8 having a headlight (not shown) and direction indicators 7. A space that is covered by the panel 4 and the front cowl 8 accommodates a handle lock module 9 therein. The handle lock module 9 includes an engine starter switch (also simply referred to as "knob switch") 40 with a manipulator, i.e., a knob 41, exposed on the panel 4.

A seat 13 is disposed on an upper portion of a rear cowl 12. The seat 13 doubles as a lid for covering a storage box for storing a helmet, etc. and a fuel tank (both not shown), the storage box and the fuel tank being also covered with the rear cowl 12. A battery B is disposed below the seat 13. The seat 13 can be opened and closed in order to perform its function as the lid, and has an electric lock device 14 that can be operated by a solenoid.

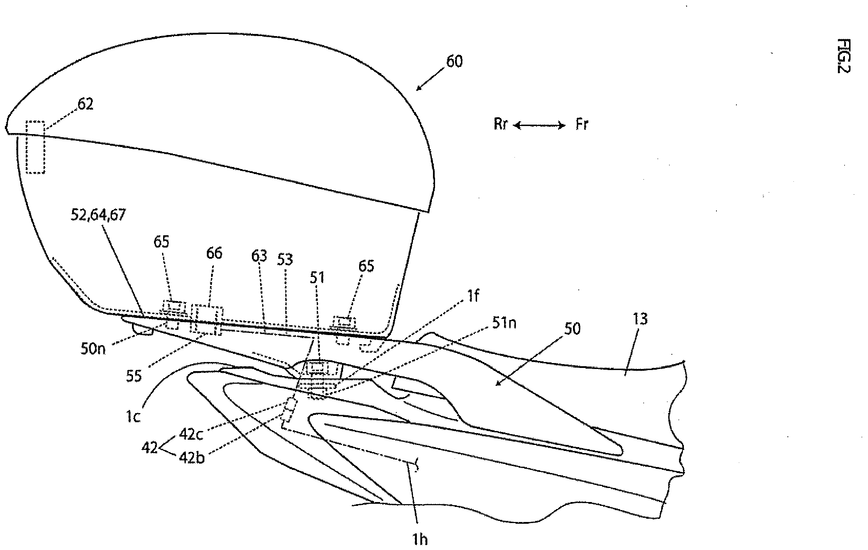

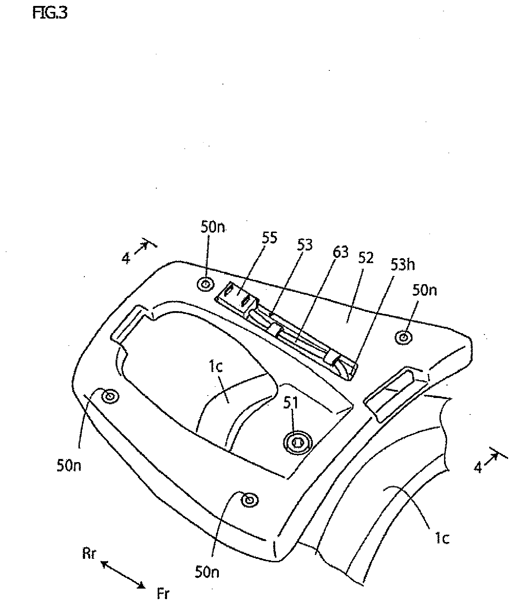

As shown in FIGS. 1 through 3, the saddle-type vehicle 1 has a carrier 50 on which an additional storage box 60 can removably be mounted, a carrier fixing member 51 (FIG. 3) for fixing the carrier 50 to a vehicle body frame 1f (FIG. 2), a vehicle body cover 1c fixed to the vehicle body frame 1f, a harness 63 for supplying electric power from the vehicle-side battery B to the additional storage box 60, a vehicle-side harness 1h (FIG. 2) to which the vehicle-side battery B and other electric components are connected, and a connection coupler 42 for interconnecting the vehicle-side harness 1h and the harness 63 within the vehicle body cover 1c.

The carrier 50 has a carrier-side facing 52 that faces the additional storage box 60 and a wire channel 53 through which the harness 63 can be threaded.

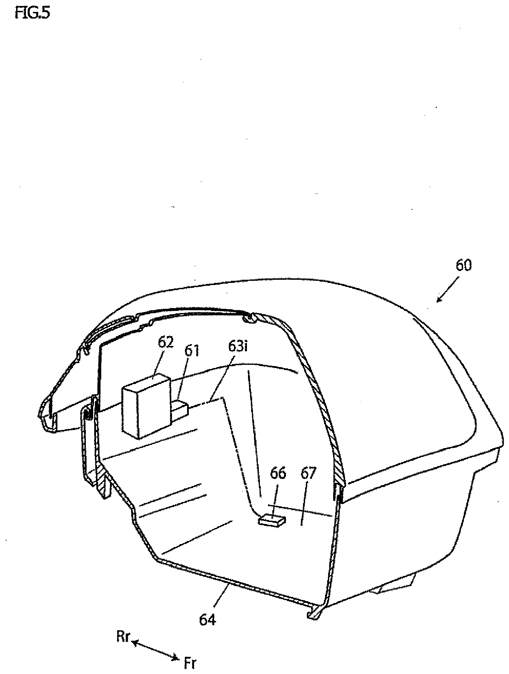

As shown in FIG. 5, the additional storage box 60 houses therein an electric component 61 and a lock mechanism 62, and has a box-side facing 64 that faces the carrier-side facing 52.

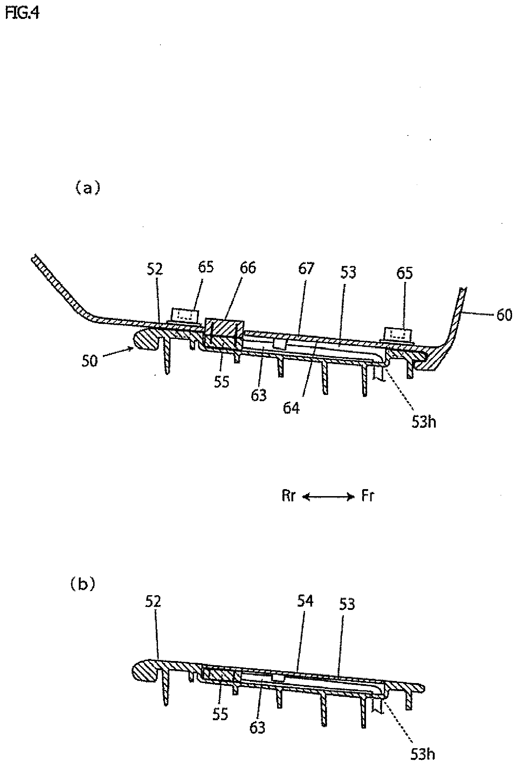

As shown in FIGS. 2 and 4(a), the additional storage box 60 is fixed to the carrier 50 by box fixing members 65 that can be manipulated only from within the additional storage box 60.

According to the present embodiment, the carrier fixing member 51 doubles as a vehicle body cover fixing member for fixing the vehicle body cover 1c to the vehicle body frame 1f.

Since the carrier fixing member (vehicle body cover fixing member) 51 is fully covered by the additional storage box 60 when the additional storage box 60 is mounted on the carrier 50, the carrier fixing member (vehicle body cover fixing member) 51 can be manipulated only when the additional storage box 60 is removed from the carrier 50.

As also shown in FIG. 4(a), the wire channel 53 of the carrier 50 is covered by the box-side facing 64 so that the harness 63 cannot be manipulated, when the additional storage box 60 is fixed to the carrier 50.

With the saddle-type vehicle 1, when the additional storage box 60 is fixed to the carrier 50, since the wire channel 53 of the carrier 50 is covered by the box-side facing 64 so that the harness 63 cannot be manipulated, the harness 63 is not exposed to external view.

As the additional storage box 60 is fixed to the carrier 50 by the box fixing members 65 that can be manipulated only from within the additional storage box 60, it is extremely difficult to remove the additional storage box 60 unless the additional storage box 60 is unlocked.

Therefore, the saddle-type vehicle 1 makes it extremely hard for third parties to make an unauthorized intervention against the electric wires 63 from outside.

When the additional storage box 60 is to be installed for the first time, the harness 63 on the additional storage box 60 can be connected to the vehicle-side harness 1h by the connection coupler 42. Consequently, the harness 63 can easily be connected to the vehicle-side harness 1h.

The connection coupler 42 is disposed within the vehicle body cover 1c. The vehicle body cover 1c is fixed to the vehicle body frame 1f by the vehicle body cover fixing member 51 which can be manipulated only when the additional storage box 60 is removed from the carrier 50. The additional storage box 60 is fixed to the carrier 50 by the box fixing members 65 that can be manipulated only from within the additional storage box 60. Therefore, it is extremely difficult to remove the vehicle body cover 1c unless the additional storage box 60 is unlocked.

Consequently, the saddle-type vehicle 1 also makes it extremely hard for third parties to make an unauthorized intervention against the connection coupler 42 from outside.

According to the present embodiment, as shown in FIGS. 2 and 3, the vehicle body cover fixing member/carrier fixing member 51 includes a bolt. The vehicle body cover 1c and the carrier 50 are fastened together to the vehicle body frame 1f by the bolt 51 and a nut 51n.

The box fixing members 65 also include bolts. In FIG. 3, 50n denotes internally threaded holes defined in the carrier 50 as joint areas to which the bolts 65 are fastened. The internally threaded holes 50n are not exposed anywhere except the carrier-side facing 52.

As shown in FIG. 1, the saddle-type vehicle 1 has a control unit CU that is energized by the vehicle-side battery B to unlock the additional storage box 60 in response to operation of a remote control key 100.

As shown in FIG. 5, the lock mechanism 62 is actuated by the electric component 61 that is energized by electric power input from outside. When the control unit CU receives a signal from the remote control key 100, the control unit CU supplies electric power to the electric component 61 to unlock the lock mechanism 62.

With this arrangement, it is possible to install the additional storage box 60 that is inexpensive as it does not require a receiver for receiving the signal from the remote control key 100.

The electric component 61 may include a solenoid, for example, and the lock mechanism 52 may include a known lock mechanism that can be actuated by a solenoid.

The control unit CU may incorporate an LF antenna and an RF antenna, as is the case with a smart key system, and may perform an ID matching process together with the remote control key 100 for individually unlocking a handle lock, opening the seat 13, and opening the additional storage box 60.

For example, when the knob switch 40 is pressed, the ID matching process may be started, and the seat 13 may be opened when a seat opening switch 40s is pressed on the condition that an ID match is established.

For example, furthermore, as shown in FIG. 1, a switch 13s for starting the ID matching process may be provided near a grip 13h of the seat 13, and after the switch 13s is turned on, the lock device 14 for the seat may be unlocked on the condition that an ID match is established. Similarly, a switch 60s for starting the ID matching process may be provided near a grip 60h of the additional storage box 60, and after the switch 60s is turned on, the lock mechanism 62 for the additional storage box may be unlocked on the condition that an ID match is established.

For example, furthermore, a starter switch ST disposed on the handle 2 may be used as a switch for starting the ID matching process for opening the additional storage box 60.

As shown in FIG. 4(b), the wire channel 53 of the carrier 50 is closed by a wire channel cover 54 when the additional storage box 60 is not mounted on the carrier 50.

With this arrangement, the wire channel 53 is not exposed even when the additional storage box 60 is not mounted in place.

As shown in FIGS. 2 through 4(a), a carrier-side connector 55 that is disposed in the wire channel 53 of the carrier 50 is provided on an end of the harness 63.

An additional storage box-side connector 66 is provided on the box-side facing 64 of the additional storage box 60. The additional storage box-side connector 66 is connected to the carrier-side connector 55 when the additional storage box 60 is mounted on the carrier 50.

With this arrangement, the electric component 61 in the additional storage box 60 is connected to the vehicle-side harness 1h simply when the additional storage box 60 is mounted on the carrier 50.

More specifically, for installing the additional storage box 60 on the saddle-type vehicle 1 for the first time, the wire channel cover 54 of the carrier 50 is removed, and the harness 63 is placed in the wire channel 53. One end of the harness 63 is threaded through an insertion hole 53h (FIGS. 3 and 4(a)) defined in an end of the wire channel 53 into the vehicle body cover 1c, and a carrier-side connection coupler 42c on that end of the harness 63 is connected to a vehicle-side connection coupler 42b.

The carrier-side connector 55 on the other end of the harness 63 is fixed to the other end of the wire channel 53.

As shown in FIG. 5, the additional storage box-side connector 66 is connected in advance to the electric component (solenoid) 61 by an in-box harness 63i.

As described above, when the additional storage box 60 is mounted on the carrier 50, the carrier-side connector 55 and the additional storage box-side connector 66 are connected to each other, allowing the vehicle-side battery B to energize the electric component 61 and also allowing the control unit CU to control the electric component 61.

As can be understood from the above description, the saddle-type vehicle includes:
the carrier 50 with the additional storage box 60 being selectively and removably mountable thereon, the additional storage box 60 having the electric component 61 and the lock mechanism 62 which are disposed internally and also having the harness 63 disposed externally which is to be connected to the electric component 61; and
the carrier fixing member 51 for fixing the carrier 50 to the vehicle body frame 1f;
wherein the carrier 50 includes the carrier-side facing 52 that faces the additional storage box 60 when the additional storage box 60 is mounted on the carrier 50, the wire channel 53 defined in the carrier-side facing 52 and allowing the harness 63 to be threaded therethrough, and the joint areas 50n to which the box fixing members 65 that can be manipulated only from within the additional storage box 60 are fastened, the joint areas 50n being defined in the carrier-side facing 52; and
when the additional storage box 60 is mounted on the carrier 50, the carrier fixing member 51 and the wire channel 53 are covered by the box-side facing 64 of the additional storage box 60 which faces the carrier 50 so that the carrier fixing member 51 and the harness 63 cannot be manipulated.

With the above saddle-type vehicle, when the additional storage box 60 is mounted on the carrier 50, since the wire channel 53 of the carrier 50 is covered by the box-side facing 64 so that the harness 63 cannot be manipulated, the harness 63 is not exposed to external view. As the additional storage box 60 is fixed to the carrier 50 by the box fixing members 65 that can be manipulated only from within the additional storage box 60, it is extremely difficult to remove the additional storage box 60 unless the additional storage box 60 is unlocked.

Therefore, when the additional storage box 60 is mounted on the carrier 50, the saddle-type vehicle makes it extremely hard for third parties to make an unauthorized intervention against the electric wires 63 from outside.

As can be understood from the above description, the additional storage box 60 for use on the saddle-type vehicle has the electric component 61 and the lock mechanism 62 which are disposed internally, the additional storage box 60 being removably mountable on the carrier 50 of the saddle-type vehicle 1. The additional storage box 60 includes the harness 63 for energizing the electric component 61 by being connected to the vehicle-side harness 1h of the saddle-type vehicle 1, and a wire channel closure 67 (FIG. 5) for closing the wire channel 53 defined in the carrier 50 for the harness 63 when the additional storage box 60 is mounted on the carrier 50. According to the present embodiment, the wire channel closure 67 includes the box-side facing (the bottom of the box) 64.

When the additional storage box 60 for use on the saddle-type vehicle is fixed to the carrier 50, since the wire channel 53 defined in the carrier 50 for the harness 63 is closed by the wire channel closure 67 of the additional storage box 60, the harness 63 is not exposed to external view.

Consequently, it is extremely hard for third parties to make an unauthorized intervention against the electric wires from outside.

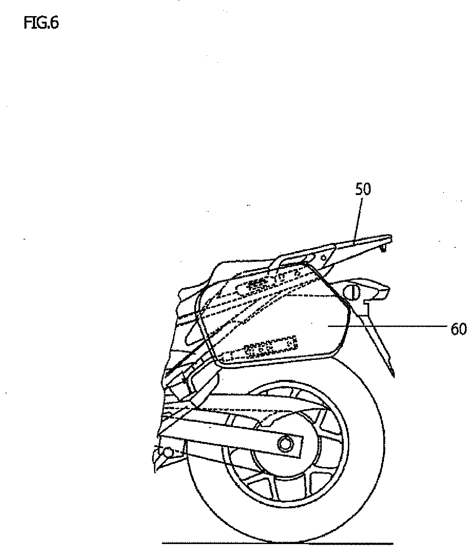

Although the embodiments of the present invention have been described above, the present invention is not limited to the above embodiments, but change and modifications may be made therein within the scope of the present invention defined in the appended claims. For example, as shown in FIG. 6, the present invention is also applicable to an additional storage box 60 which is removably mounted on a side of the carrier 50.

B: Vehicle-side battery, CU: Control unit, 1c: Vehicle body cover, 1f: Vehicle body frame, 1h: Vehicle-side harness, 42: Connection coupler, 50: Carrier, 51: Vehicle body cover fixing member (carrier fixing member), 52: Carrier-side facing, 53: Wire channel, 54: Wire channel cover, 55: Carrier-side connector, 60: Additional storage box, 61: Electric component, 62: Lock mechanism, 63: Harness, 64: Box-side facing, 65: Box fixing member, 66: Additional storage box-side connector, 67: Wire channel closure, 100: Remote control key.

## Claims

1. A saddle-type vehicle including:
an additional storage box (60) having an electric component (61) and a lock mechanism (62) therein;
a harness (63) to be connected to said electric component (61);
a carrier (50) on which said additional storage box (60) can selectively and removably be mounted; and
a carrier fixing member (51) fixing said carrier (50) to a vehicle body frame (1f);
wherein said carrier (50) includes a carrier-side facing (52) that faces said additional storage box (60) and a wire channel (53) allowing said harness (63) to be threaded therethrough,
said additional storage box (60) includes box fixing members (65) fixing said additional storage box (60) to said carrier (50), said box fixing members (65) being manipulatable only from within said additional storage box (60), and a box-side facing (64) that faces said carrier-side facing (52),
said carrier (50) is fixed to said vehicle body frame (1f) by a carrier fixing member (51) which can be manipulated only when said additional storage box (60) is removed from said carrier (50), and
**characterized in that**
said wire channel (53) of said carrier (50) is covered by said box-side facing (64) so that said harness (63) cannot be manipulated when said additional storage box (60) is fixed to said carrier (50).

2. The saddle-type vehicle according to claim 1, further including:
a vehicle-side battery (B) energizing said electric component (61); and
a control unit (CU) energizable by said vehicle-side battery (B) to unlock said additional storage box (60) in response to operation of a remote control key (100);
wherein said lock mechanism (62) is actuatable by said electric component (61) that is energized by electric power input from outside, and when said control unit (CU) receives a signal from said remote control key (100), said control unit (CU) supplies electric power to said electric component (61) to unlock said lock mechanism (62).

3. The saddle-type vehicle according to claim 1 or 2, further including:
a vehicle body cover (1c) fixed to said vehicle body frame (1f);
a vehicle-side harness (1h) connected to said harness (63), supplying electric power from said vehicle-side battery (B) to said electric component (61); and
a connection coupler (42) connecting said harness (63) and said vehicle-side harness (1h) to each other within said vehicle body cover (1c);
wherein said vehicle body cover (1c) is fixed to said vehicle body frame (1f) by a vehicle body cover fixing member (51) which can be manipulated only when said additional storage box (60) is removed from said carrier (50).

4. The saddle-type vehicle according to any one of claims 1 through 3, further including:
a carrier-side connector (55) provided on an end of said harness (63) and disposed in said wire channel (53) of said carrier (50); and
an additional storage box-side connector (66) provided on said box-side facing (64) of said additional storage box (60), said additional storage box-side connector (66) being connected to said carrier-side connector (55) when said additional storage box (60) is mounted on said carrier (50).

5. The saddle-type vehicle according to any one of claims 1 through 4,
wherein said wire channel (53) of said carrier (50) is closed by a wire channel cover (54) when said additional storage box (60) is not mounted on said carrier (50).

## Patentansprüche

1. Fahrzeug vom Sattelfahrtyp, aufweisend:
einen zusätzlichen Aufbewahrungsbehälter (60), der eine elektrische Komponente (61) und einen Verschließmechanismus (62) darin hat;
einen Kabelstrang (63), der mit der elektrischen Komponente (61) zu verbinden ist;
einen Träger (50), auf dem der zusätzliche Aufbewahrungsbehälter (60) wahlweise und entfernbar montiert werden kann; und
ein Trägerfixierelement (51), das den Träger (50) an dem Fahrzeugrahmen (1f) fixiert;
wobei der Träger (50) eine trägerseitige Fläche (52) aufweist, die dem zusätzlichen Aufbewahrungsbehälter (60) zugewandt ist, und einen Kabelkanal (53), der es dem Kabelstrang (63) erlaubt hindurchgefädelt zu werden,
wobei der zusätzliche Aufbewahrungsbehälter Behälterfixierelemente (65) aufweist, die den zusätzlichen Aufbewahrungsbehälter (60) an dem Träger (50) fixieren, wobei die Behälterfixierelemente (65) nur von innerhalb des zusätzlichen Aufbewahrungsbehälters (60) bedienbar sind, und eine behälterseitige Fläche (64), die der trägerseitigen Fläche (52) zugewandt ist,
wobei der Träger (50) an dem Fahrzeugrahmen (1f) durch ein Trägerfixierelement (51) fixiert ist, welches nur bedient werden kann, wenn der zusätzliche Aufbewahrungsbehälter (60) von dem Träger (50) abgenommen ist, und
**dadurch gekennzeichnet, dass**
der Kabelkanal (53) des Trägers (50) durch die behälterseitige Fläche (64) abgedeckt ist, so dass der Kabelstrang (63) nicht manipuliert werden kann, wenn der zusätzliche Aufbewahrungsbehälter (60) an dem Träger (50) fixiert ist.

2. Fahrzeug vom Sattelfahrtyp gemäß Anspruch 1, weiterhin aufweisend:
eine fahrzeugseitige Batterie (B), die die elektrische Komponente (61) mit Energie versorgt, und
eine Steuereinheit (CU), die durch die fahrzeugseitige Batterie (B) mit Energie versorgbar ist, um den zusätzlichen Aufbewahrungsbehälter (60) als Reaktion auf eine Bedienung einer Fernbedienungstaste (100) aufzuschließen; wobei
eder Schließmechanismus (62) durch die elektrische Komponente (61) aktivierbar ist, die mit elektrischer Energie, die von außerhalb zugeführt wird, mit Energie versorgt wird, und die Steuereinheit (CU) elektrische Leistung der elektrischen Komponente (61) zuführt, um den Schließmechanismus (62) zu entsperren, wenn die Steuereinheit (CU) ein Signal von der Fernbedienungstaste (100) erhält.

3. Fahrzeug vom Sattelfahrtyp gemäß Anspruch 1 oder 2, weiterhin aufweisend:
eine Fahrzeugkarosserieabdeckung (1c), die an dem Fahrzeugkarosserierahmen (1f) fixiert ist;
einen fahrzeugseitigen Kabelstrang (1h), der mit dem Kabelstrang (63) verbunden ist und der der elektrischen Komponente (61) elektrische Leistung von der fahrzeugseitigen Batterie (B) zuführt; und
einen Verbindungsverbinder (62), der den Kabelstrang (63) und den fahrzeugseitigen Kabelstrang (1h) miteinander verbindet, innerhalb der Fahrzeugkarosserieabdeckung (1c); wobei
die Fahrzeugkarosserieabdeckung (1c) an dem Fahrzeugkarosserierahmen (1f) durch ein Fahrzeugkarosserieabdeckungsfixierelement (51) fixiert ist, das nur bedient werden kann, wenn der zusätzliche Aufbewahrungsbehälter (60) von dem Träger (50) abgenommen ist.

4. Fahrzeug vom Sattelfahrtyp gemäß einem der Ansprüche 1 bis 3, weiterhin aufweisend:
einen trägerseitigen Verbinder (55), der an einem Ende des Kabelstrangs (63) vorgesehen ist, und der in dem Kabelkanal (53) des Trägers (50) angeordnet ist; und
einen Verbinder auf Seiten des zusätzlichen Aufbewahrungsbehälters (66), der an der behälterseitigen Fläche (64) der zusätzlichen Aufbewahrungsbox (60) vorgesehen ist, wobei der Verbinder (66) der auf der Seite der zusätzlichen Aufbewahrungsbox ist, mit dem trägerseitigem Verbinder (55) verbunden ist, wenn der zusätzliche Aufbewahrungsbehälter (60) auf dem Träger (50) montiert ist.

5. Fahrzeug vom Sattelfahrtyp gemäß einem der Ansprüche 1 bis 4, wobei
der Kabelkanal (53) des Trägers (50) durch eine Kabelkanalabdeckung (54) geschlossen ist, wenn der zusätzliche Aufbewahrungsbehälter (60) nicht auf dem Träger (50) montiert ist.

## Revendications

1. Véhicule du type à selle incluant :
un coffre de rangement additionnel (60) ayant un composant électrique (61) et un mécanisme de verrou (62) à l'intérieur ;
un harnais (63) à connecter audit composant électrique (61) ;
un porte-bagages (50) sur lequel ledit coffre de rangement additionnel (60) peut être monté sélectivement et de manière amovible ; et
un organe de fixation de porte-bagages (51) fixant ledit porte-bagages (50) à une ossature de caisse de véhicule (1f) ;
dans lequel ledit porte-bagages (50) inclut une façade côté porte-bagages (52) qui fait face audit coffre de rangement additionnel (60) et un chemin de câbles (53) permettant de faire passer ledit harnais (63) au travers,
ledit coffre de rangement additionnel (60) inclut des organes de fixation de coffre (65) fixant ledit coffre de rangement additionnel (60) audit porte-bagages (50), lesdits organes de fixation de coffre (65) pouvant être manipulés uniquement depuis l'intérieur dudit coffre de rangement additionnel (60), et une façade côté coffre (64) qui fait face à ladite façade côté porte-bagages (52),
ledit porte-bagages (50) est fixé à ladite ossature de caisse de véhicule (1f) par un organe de fixation de porte-bagages (51) qui peut être manipulé uniquement lorsque ledit coffre de rangement additionnel (60) est enlevé dudit porte-bagages (50), et
**caractérisé en ce que**
ledit chemin de câbles (53) dudit porte-bagages (50) est couvert par ladite façade côté coffre (64) de sorte que ledit harnais (63) ne peut pas être manipulé lorsque ledit coffre de rangement additionnel (60) est fixé audit porte-bagages (50).

2. Véhicule du type à selle selon la revendication 1, incluant en outre :
une batterie côté véhicule (B) alimentant en énergie ledit composant électrique (61) ; et
une unité de commande (CU) pouvant être alimentée en énergie par ladite batterie côté véhicule (B) pour déverrouiller ledit coffre de rangement additionnel (60) en réponse à une opération d'une touche de télécommande (100) ;
dans lequel ledit mécanisme de verrou (62) est actionnable par ledit composant électrique (61) qui est alimenté en énergie par une alimentation électrique fournie depuis l'extérieur, et lorsque ladite unité de commande (CU) reçoit un signal de ladite touche de télécommande (100), ladite unité de commande (CU) fournit une alimentation électrique audit composant électrique (61) pour déverrouiller ledit mécanisme de verrou (62).

3. Véhicule du type à selle selon la revendication 1 ou 2, incluant en outre :
un cache-caisse de véhicule (1c) fixé à ladite ossature de caisse de véhicule (1f) ;
un harnais côté véhicule (1h) connecté audit harnais (63), fournissant l'alimentation électrique de ladite batterie côté véhicule (B) audit composant électrique (61) ; et
un coupleur de connexion (42) connectant ledit harnais (63) et ledit harnais côté véhicule (1h) l'un à l'autre au sein dudit cache-caisse de véhicule (1c) ;
dans lequel ledit cache-caisse de véhicule (1e) est fixé à ladite ossature de caisse de véhicule (1f) par un organe de fixation de cache-caisse de véhicule (51) qui peut être manipulé uniquement lorsque ledit coffre de rangement additionnel (60) est enlevé dudit porte-bagages (50).

4. Véhicule du type à selle selon l'une quelconque des revendications 1 à 3, incluant en outre :
un connecteur côté porte-bagages (55) ménagé sur une extrémité dudit harnais (63) et disposé dans ledit chemin de câbles (53) dudit porte-bagages (50) ; et
un connecteur côté coffre de rangement additionnel (66) ménagé sur ladite façade côté coffre (64) dudit coffre de rangement additionnel (60), ledit connecteur côté coffre de rangement additionnel (66) étant connecté audit connecteur côté porte-bagages (55) lorsque ledit coffre de rangement additionnel (60) est monté sur ledit porte-bagages (50).

5. Véhicule du type à selle selon l'une quelconque des revendications 1 à 4,
dans lequel ledit chemin de câbles (53) dudit porte-bagages (50) est fermé par un cache-chemin de câbles (54) lorsque ledit coffre de rangement additionnel (60) n'est pas monté sur ledit porte-bagages (50).
